# EUROPÄISCHE PATENTSCHRIFT

(11) **EP 3 526 482 B1**
(45) Veröffentlichungstag und Bekanntmachung des Hinweises auf die Patenterteilung: **12.08.2020**
(21) Anmeldenummer: 17778171.3
(22) Anmeldetag: 15.09.2017
(51) Int. Cl.: F16D 21/06, F16D 13/52, F16D 25/0638, F16D 43/06

(54) **KUPPLUNGSEINRICHTUNG**
CLUTCH DEVICE
ENSEMBLE EMBRAYAGE

(30) Priorität: 11.10.2016 DE 102016219682
(43) Veröffentlichungstag der Anmeldung: 21.08.2019
(73) Patentinhaber: Schaeffler Technologies AG & Co. KG, 91074 Herzogenaurach (DE)
(72) Erfinder: GRUCA, Werner, 77876 Kappelrodeck (DE); SEIFERMANN, Achim, 76473 Iffezheim (DE); FINK, Jasper, 77880 Sasbach (DE); BUTSCHER, Hannes, 76547 Sinzheim (DE)
(86) Internationale Anmeldenummer: PCT/DE2017/100787
(87) Internationale Veröffentlichungsnummer: WO 2018/068782

(56) Entgegenhaltungen:
- DE-A1- 3 827 946
- DE-A1-102004 027 088
- DE-A1-102009 002 038
- JP-U- S6 028 634

## Beschreibung

Die Erfindung betrifft eine Kupplungseinrichtung mit den Merkmalen gemäß dem Oberbegriff von Anspruch 1. Insbesondere betrifft die Erfindung eine Kupplungseinrichtung, umfassend einen Außenlamellenträger mit daran axial verschiebbar angeordneten Außenlamellen, einen Innenlamellenträger mit daran axial verschiebbaren Innenlamellen, wobei die Außen- und die Innenlamellen ein Lamellenpaket bilden, sowie ein Betätigungselement, über das das Lamellenpaket axial zusammendrückbar ist, wobei das Betätigungselement beim Zusammendrücken gegen ein Federpaket bewegbar ist.

Eine derartige Kupplungseinrichtung dient der Verbindung eines Antriebs, beispielsweise einer Brennkraftmaschine, mit einem Getriebe. Hierzu ist ein Außenlamellenträger mit daran angeordneten Außenlamellen sowie ein Innenlamellenträger mit daran angeordneten Innenlamellen vorgesehen, wobei die Innenlamellen zwischen die Außenlamellen greifen. Die Außenlamellen sind beispielsweise Stahllamellen, während die Innenlamellen Reiblamellen sind. Beim Zusammendrücken des Lamellenpakets über ein Betätigungselement, beispielsweise ein Drucktopf, wird ein Reibschluss zwischen den Stahl- und den Reiblamellen erwirkt, so dass eine Rotation des Außenlamellenträgers auf den Innenlamellenträger übertragen wird, der seinerseits mit einer zum Getriebe führenden Welle gekoppelt ist.

Das Betätigungselement, also beispielsweise der Drucktopf, wird in vielen Ausgestaltungen hydraulisch betätigt. Ihm zugeordnet ist eine Druckkammer, in die ein Hydraulikfluid eingeführt wird. Das Betätigungselement, also der Drucktopf, ist gegen ein Federpaket bewegbar, wenn das Lamellenpaket zusammengedrückt wird. Über dieses Federpaket wird das Betätigungselement nach Entlastung des hydraulischen Drucks wieder zurückgestellt, so dass auch das Lamellenpaket entlastet wird und der Reibschluss aufgehoben wird, das heißt, dass das Lamellenpaket "gelüftet" wird.

Eine derartige Kupplungseinrichtung mit hydraulischer Betätigung des Betätigungselements und entsprechenden Drehdurchführungen zum Zuführen des Hydraulikfluids zeigen prinzipbedingt eine Abhängigkeit der Anpresskraft des Betätigungselements an das Lamellenpaket von der Drehzahl. Je höher die Drehzahl, desto höher die Anpresskraft. Um diesen Effekt auszugleichen, ist üblicherweise an der dem Betätigungselement gegenüberliegenden Seite eine Ausgleichskammer vorgesehen, die ebenfalls mit Hydraulikfluid geflutet wird und über die quasi ein den drehzahlbedingten "Überdruck" kompensierender Gegendruck erzeugt wird. Hierüber kann dieser drehzahlabhängige Effekt ausgeglichen werden. Jedoch bedingt dies, eine solche Ausgleichskammer vorzusehen, was Bauraum kostet.

Aus jeder der DE 38 27 946 A1 und der DE 10 2004 027088 A1 ist eine Kupplungseinrichtung gemäß dem Oberbegriff des Anspruchs 1 bekannt.

Bezüglich weiteren Standes der Technik wird auf die JP S60 28634 U und die DE 10 2009 002038 A1 verwiesen.

Der Erfindung liegt damit das Problem zugrunde, eine demgegenüber verbesserte Kupplungseinrichtung anzugeben.

Zur Lösung dieses Problems ist bei einer Kupplungseinrichtung der eingangs genannten Art erfindungsgemäß eine Einrichtung zum drehzahlabhängigen Variieren der Vorspannung des Federpakets vorgesehen.

Während bisher über den in der Ausgleichskammer erzeugten Hydraulikdruck der Gegendruck erzeugt wurde, wird erfindungsgemäß die Vorspannung des Federpakets, die dem Betätigungselement beim Zusammendrücken des Lamellenpakets entgegengerichtet ist, in Abhängigkeit der Drehzahl variiert. Je höher die Drehzahl, umso höher ist der drehzahlabhängige "Überdruck" auf der Hydraulikseite, umso höher wird aber auch die an der gegenüberliegenden Seite entgegengerichtete Vorspannung über die erfindungsgemäß vorgesehene Einrichtung eingestellt, so dass sich der "Überdruck" und die Vorspannungsüberhöhung soweit als möglich kompensieren. Hierüber ist es möglich, auf eine Ausgleichskammer und den damit verbundenen Bauraum zu verzichten respektive den Bauraum anderweitig zu nutzen.

Die Einrichtung selbst umfasst erfindungsgemäß mehrere radial bewegbare Keilelemente, die mit einer Keilfläche auf dem Federpaket zugeordneten Keilflächen abgleiten. Es ist also eine Keilverbindung vorgesehen. Diese umfasst mehrere radial bewegbare Keilelemente, die an einem Widerlager axial abgestützt sind. Dieses Widerlager kann bei Ausführung als Einfachkupplung eine Stützringwand sein, bei Ausführung als Doppelkupplung beispielsweise der zweite Außenlamellenträger der zweiten Kupplungseinrichtung oder ebenfalls eine Stützringwand oder dergleichen.

Dem Keilelement zugeordnet sind entsprechende, mit dem Federpaket gekoppelte oder diesem zugeordnete Keilflächen, die radial gesehen positionsfest sind, aber natürlich axial beweglich sind. Mit zunehmender Drehzahl wandern die Keilelemente fliehkraftbedingt radial nach außen, sie gleiten auf den dem Federpaket zugeordneten Keilflächen ab. Hierüber wird das Federpaket zusätzlich komprimiert, das heißt, dass zusätzlich zu der Kompression, die über das Betätigungselement eingetragen wird, eine weitere Kompressionskomponente über die radial nach außen getriebenen Keilelemente gegeben ist. Die innerhalb des Federpakets gegebene Rückstellkraft respektive Vorspannungskomponente wird hierdurch erhöht, worüber der drehzahlbedingte hydraulische "Überdruck" kompensiert wird.

Jedes bewegbare Keilelement ist zweckmäßigerweise an einer radial verlaufenden Führung geführt, so dass es nur eine definierte Bewegung in eine definierte Bewegungsrichtung vollziehen kann. Diese Führung kann unterschiedlicher Natur sein. Beispielsweise sind die Keilelemente in am Widerlager ausgebildeten Nuten axial geführt, das heißt, dass die benachbarte Stützringwand oder der benachbarte zweite Außenlamellenträger mit Radialnuten ausgeführt ist. Alternativ ist es auch denkbar, dass dortseits ein Steg ausgebildet ist, der in eine entsprechende Nut am jeweiligen Keilelement eingreift. Auch eine Führung an einem dem Federpaket zugeordneten Keilflächenring, auf den nachfolgend noch eingegangen wird, ist denkbar, indem am Keilflächenring entsprechende Radialnuten ausgeführt sind, oder entsprechende Stege.

In einer besonders zweckmäßigen Weiterbildung der Erfindung kann die Steigung der Keilflächen derart sein, dass die radial ausgelenkten Keilelemente über das Federpaket wieder rückstellbar sind. Nimmt die Drehzahl wieder ab, so können durch die im Federpaket gespeicherte Rückstellkraft die Keilelemente wieder radial nach innen gedrückt werden. Das heißt, dass das System selbst rückstellend ist. Dies ist insbesondere möglich, als derartige Kupplungseinrichtungen häufig nasse Kupplungseinrichtungen sind, in denen ein Kühlfluid zirkuliert. Denn hierüber wird die Keilverbindung automatisch geschmiert, so dass ein einfaches Abgleiten sowohl nach radial außen als auch insbesondere nach radial innen zum Rückstellen möglich ist.

Alternativ ist es denkbar, dass jedes Keilelement auch gegen ein eine Rückstellkraft aufbauendes Federelement bewegbar ist. Reduziert sich die Drehzahl, so kann das Federelement über die gespeicherte Rückstellkraft das jeweilige Keilelement wieder radial nach innen ziehen.

Gemäß einer Weiterbildung der Erfindung kann das Federpaket eine Mehrzahl einzelner Federelemente umfassen, denen ein einzelne Keilflächen oder eine umlaufende Keilfläche aufweisender Ring zugeordnet ist. Dieser Ring kann an seiner den Keilelementen zugewandten Seite konisch ausgeführt sein, so dass er eine umlaufende Keilfläche bildet, auf der die Keilelemente radial gleiten. Alternativ ist es auch denkbar, an dem ebenflächigen Ring entsprechende Keilflächennuten auszuführen, in die die Keilelemente eingreifen. Diese Nuten können sodann gleichzeitig der Radialführung dienen. Über diesen Ring wird mit besonderem Vorteil mittels eines einstückigen Bauteils eine Keilflächenlagerung für sämtliche Keilelemente, gegebenenfalls sogar in Verbindung mit einer Radialführung, zur Verfügung gestellt.

Die Federelemente des Federpakets selbst sind entweder in Umfangsrichtung verteilt angeordnete Schraubenfedern oder in Axialrichtung angeordnete Tellerfeldern, beide Ausführungsformen sind gleichermaßen zweckmäßig.

Bevorzugt handelt es sich bei der Kupplungseinrichtung um eine nass laufende Kupplungseinrichtung, die von einem Kühlfluid, üblicherweise einem Kühlöl, durchströmt wird.

Neben der Kupplungseinrichtung selbst betrifft die Erfindung ferner eine Doppelkupplungseinrichtung, umfassend zwei Kupplungseinrichtungen der beschriebenen Art. Die Erfindung wird nachfolgend anhand von Ausführungsbeispielen unter Bezugnahme auf die Zeichnungen erläutert. Die Zeichnungen sind schematische Darstellungen und zeigen:
- Figur 1: eine Prinzipdarstellung einer erfindungsgemäßen Doppelkupplungseinrichtungen umfassend zwei erfindungsgemäße Kupplungseinrichtungen,
- Figur 2: eine vergrößerte Teilansicht des Bereichs II aus Figur 1,
- Figur 3: eine vergrößerte Detailansicht des Bereichs III aus Figur 2,
- Figur 4: eine Ansicht entsprechend Figur 2 mit radial verschobenem Keilelement, und
- Figur 5: eine Perspektivansicht eines Keilflächen aufweisenden Rings.

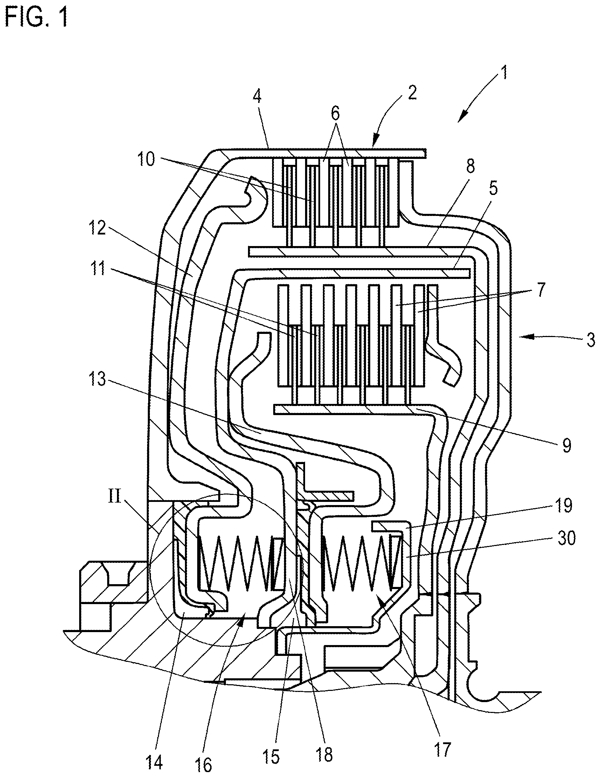

Figur 1 zeigt eine erfindungsgemäße Doppelkupplungseinrichtung 1, umfassend zwei erfindungsgemäße Kupplungseinrichtungen 2, 3, jeweils umfassend einen Außenlamellenträger 4, 5 mit daran angeordneten Außenlamellen 6, 7, beispielsweise in Form von Stahllamellen. Jede Kupplungseinrichtung 2, 3 umfasst ferner einen Innenlamellenträger 8, 9 mit daran angeordneten Innenlamellen 10, 11, beispielsweise in Form von Reiblamellen. Die Außenlamellen 6, 7 und die Innenlamellen 10, 11 sind jeweils axial beweglich an den jeweiligen Außen- und Innenlamellenträgern 4, 5, 8, 9 angeordnet und bilden jeweils ein axial zusammendrückbares Lamellenpaket.

Um die Lamellenpakete zusammenzudrücken, sind entsprechende Betätigungselemente 12, 13 in Form von Drucktöpfen vorgesehen, die jeweils hydraulisch betätigt werden können, wozu jedem Betätigungselement 12, 13 eine Druckkammer 14, 15 zugeordnet ist, in der ein hydraulischer Druck aufgebaut werden kann, über den das jeweilige Betätigungselement 12, 13 gegen das Lamellenpaket gedrückt wird.

Jedes Betätigungselement 12, 13 ist an der der Druckkammer 14, 15 gegenüber liegenden Seite über jeweils ein Federpaket 16, 17 gegengelagert, wobei jedes Federpaket gegen ein Widerlager 18, 19 axial abgestützt ist. Im Falle des Federpakets 16 ist dies der zweite Außenlamellenträger 5, im Falle des Federpakets 17 ein Stützwandring 30.

Beim axialen Bewegen der Federpakete 16, 17 über das jeweilige Betätigungselement 12, 13 werden die Federpakete 16, 17 komprimiert, es baut sich eine Rückstellkraft auf, über die bei Druckentlastung die Betätigungselemente 12, 13 wieder zurückgedrückt werden können.

Der Aufbau einer solchen Doppelkupplungseinrichtung umfassend entsprechende Kupplungseinrichtungen ist hinlänglich bekannt und bedarf keiner näheren Erläuterung mehr.

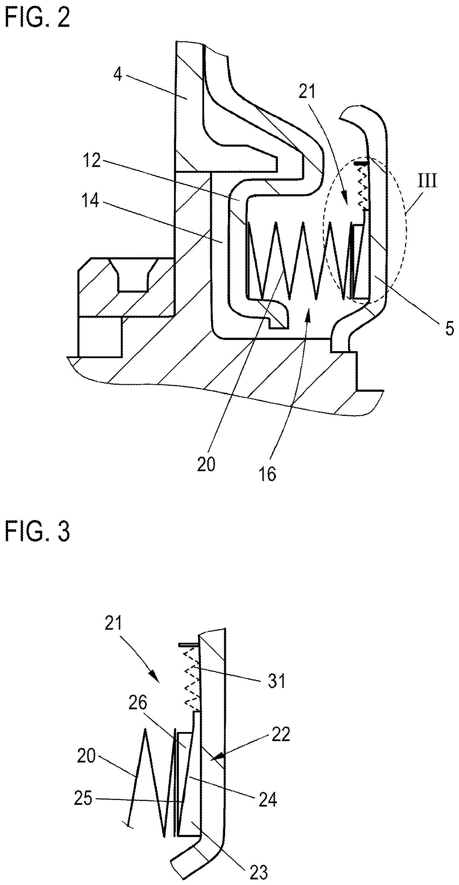

Im Falle der erfindungsgemäßen Doppelkupplungseinrichtungen respektive der erfindungsgemäßen Kupplungseinrichtungen ist eine Einrichtung zum drehzahlabhängigen Variieren der Vorspannung des jeweiligen Federpakets vorgesehen, wobei im vorliegenden Beispiel gemäß Figur 2 nur der Bereich des Federpakets 16 dargestellt ist. In vergleichbarer Weise wäre auch der Bereich des Federpakets 17 ausgeführt.

In der vergrößerten Detailansicht gemäß Figur 2 ist das Betätigungselement 12 sowie die vorgeschaltete Druckkammer 14 gezeigt, die zwischen dem Außenlamellenträger 4 und dem Betätigungselement 12 ausgebildet ist. Entsprechende Dichtmittel sind in Figur 2 nicht dargestellt.

Gezeigt ist des Weiteren das Federpaket 16, bei dem es sich, ähnlich wie beim Federpaket 17, um eine Vielzahl einzelner um den Umfang verteilt angeordneter Schraubenfedern 20 handelt, wobei in Figur 2 lediglich eine gezeigt ist. Die Schraubenfedern 20 sind mit einem Ende entweder direkt oder über einen Trägerring an dem Betätigungselement 12, also dem Drucktopf, angeordnet respektive aufgelagert, mit dem anderen Ende sind sie an der erfindungsgemäß vorgesehenen Einrichtung 21 zur drehzahlabhängigen Variation der Vorspannung des Federpakets 16 angeordnet respektive über diese Einrichtung 21 an dem zweiten Außenlamellenträger 5 abgestützt.

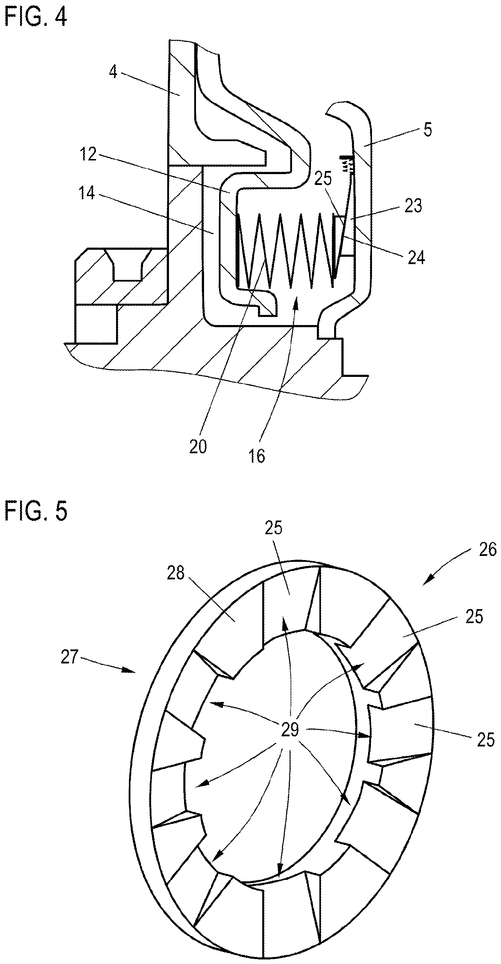

Die Einrichtung 21 umfasst, wie Figur 3 in vergrößerter Darstellung zeigt, eine Keilverbindung 22 umfassend mehrere radial bewegbare Keilelemente 23, von denen in Figur 3 (ebenso in Figur 2 und 4) nur eines gezeigt ist. Dieses Keilelement 23 weist eine Keilfläche 24 auf, mit der es an einer gegenüber liegenden Keilfläche 25, die im gezeigten Beispiel an einem Ring 26, an dem die Schraubenfeder 20 befestigt oder abgestützt ist, ausgebildet ist. An diesem Ring 26 ist die Vielzahl der um den Umfang verteilt und äquidistant voneinander beabstandete Schraubenfedern 20 angeordnet, die in ihrer Gesamtheit das Federpaket 16 bilden.

Die Betätigungselemente 12, 13, die Außenlamellenträger 4,5 bzw. Widerlager 18, 19, die Federpakete 16, 17 sowie die Einrichtung 21 bzw. die Keilelemente 23 rotieren stets gemeinsam um eine zentrale Drehachse.

Wie beschrieben ist das Keilelement 23 radial bewegbar. Mit zunehmender Drehzahl wandert es von einer exemplarisch in den Figuren 2 und 3 gezeigten, quasi unbelasteten Innenposition radial nach außen. Figur 4 zeigt eine Prinzipdarstellung, in der das Keilelement 23 radial nach außen gewandert ist, das heißt, dass der Außenlamellenträger 4 der Kupplungseinrichtung 2, mit dem die Keilelemente 23 drehen, mit entsprechend hoher Drehzahl rotiert.

Ersichtlich gleitet hierbei die Keilfläche 24 auf der Keilfläche 25 ab, was aufgrund der Auflagerung des Keilelements 23 am zweiten Außenlamellenträger 5 dazu führt, dass der Ring 26 axial nach links geschoben wird und damit zwangsläufig die Spiralfeder 20 komprimiert werden.

Nachdem um den Umfang des Rings 26 mehrere solcher radial beweglicher Keilelemente 23, vorzugsweise äquidistant verteilt, angeordnet sind, kommt es folglich an den verschiedenen Keilverbindungen 22 zu einer radialen Wanderbewegung der Keilelemente 23 und damit zu einer symmetrischen axialen Kompression sämtlicher Schraubenfedern 20 und damit des gesamten Federpakets 16. Hierüber kann die Vorspannung des Federpakets 16, die dieses auf das Betätigungselement 12, also den Drucktopf, ausübt, erhöht werden, worüber ein ebenfalls drehzahlabhängiger hydraulischer Überdruck, der bei hinreichend hoher Drehzahl in der Druckkammer 14 systembedingt gegeben ist, kompensiert werden. Das heißt, dass durch die Integration der erfindungsgemäßen Einrichtung sichergestellt werden kann, dass weitgehend unabhängig von der gegebenen Drehzahl das Lamellenpaket stets mit einer gleichbleibenden Axialkraft zusammengedrückt wird.

Nimmt die Drehzahl wieder ab, so wandern die Keilelemente 23 wieder nach innen, was dazu führt, dass die Schraubenfedern 20 wieder relaxieren, sich das Federpaket 16 also wieder entspannt und sich axial nach rechts gemäß den Figuren 2 - 4 längt. Die erhöhte Vorspannung wird wieder abgebaut.

Um die radiale Einwärtsbewegung der Keilelemente 23 bei abnehmender Drehzahl sicherzustellen, ist bevorzugt die Steigung der Keilflächen 24, 25 so bemessen, dass es ein selbst rückstellendes System ist, das heißt, dass automatisch bei einer Reduktion der Drehzahl aufgrund der gegebenen Steigung das Federpaket 16 die radial ausgelängten Keilelemente 23 wieder radial nach innen drückt. Alternativ wäre es sogar denkbar, dass jedes Keilelement 23 gegen die Rückstellkraft eines hier nur gestrichelt gezeigten Federelements 31 radial bewegbar wäre, so dass, gegebenenfalls unterstützend, diese Federelemente die Keilelemente wieder zurückdrücken.

Um den Umfang sind wie beschrieben mehrere Keilelemente 23 verteilt angeordnet, wobei die Anzahl der Keilelemente natürlich deutlich geringer ist als die Anzahl der um den Umfang verteilten Schraubenfedern 20 des Federpakets 16. Da die Keilelemente 23 eine definierte Radialbewegung durchführen sollen ist es zweckmäßig, sie in entsprechenden radial verlaufenden Führungen zu führen, so dass sie nur eine definierte Radialbewegung vollziehen können. Ein Beispiel für eine solche Radialführung ist in Figur 5 gezeigt. Figur 5 zeigt eine Perspektivansicht des Rings 26, an dessen Rückseite 27 die Schraubenfedern 20 befestigt sind, wozu rückseitig entsprechende Vorsprünge oder Ähnliches ausgebildet oder durchgestellt sein können oder sonstige Halteelemente vorgesehen sein können, an denen die Schraubenfedern 20 fixiert sind. Die Rückseite 27 gegenüber liegende Ringseite 28 ist ebenflächig. Zur Ausbildung der Keilflächen 25 jedoch sind entsprechende Keilnuten 29 ausgebildet, die in die Ebene der Ringseite 28 laufen. Sie sind zwangsläufig beidseits begrenzt, wobei die Begrenzungswände die Radialführung für jedes in der jeweiligen Nut 29 aufgenommene Keilelement 23 bilden. Hierüber kann folglich mit einem einzigen Bauteil, nämlich dem Ring 26 einerseits die entsprechende Keilfläche für die Vielzahl der Keilverbindungen 22 zur Verfügung gestellt werden, zum anderen auch gleichzeitig eine Keilelementführung.

Alternativ wäre es denkbar, den Ring 26 als an der Ringseite 28 konischen Ring auszuführen, so dass er quasi über seinen gesamten Umfang eine Keilfläche zur Verfügung stellt. In diesem Fall wäre es erforderlich, die einzelnen Keilelemente 23 beispielsweise an dem zweiten Außenlamellenträger 5 zu führen, an dem beispielsweise entsprechende Führungsnuten eingeprägt sind oder Ähnliches.

Daneben besteht die Möglichkeit, anstelle der Mehrzahl einzelner Schraubenfedern 20 ein Tellerfederpaket, bestehend aus mehreren axialen hintereinander angeordneten Tellerfedern, vorzusehen. Diese Tellerfedern wären ebenfalls als Paket über einen Ring 26 abgeschlossen, über den die entsprechenden Keilverbindungen 22 realisiert werden.

Wenngleich im Beispiel gemäß der Figuren 2 - 5 die erfindungsgemäße Einrichtung 21 im Zusammenhang mit dem Federpaket 16 beschrieben ist, ist diese gleichermaßen beim zweiten Federpaket 17 integriert. In diesem Fall wären die Keilelemente 23 an der Stützwandring 30 entsprechend abgestützt und gegebenenfalls auch radial geführt.

### Bezugszeichenliste

- 1: Doppelkupplungseinrichtung
- 2: Kupplungseinrichtung
- 3: Kupplungseinrichtung
- 4: Außenlamellenträger
- 5: Außenlamellenträger
- 6: Außenlamelle
- 7: Außenlamelle
- 8: Innenlamellenträger
- 9: Innenlamellenträger
- 10: Innenlamelle
- 11: Innenlamelle
- 12: Betätigungselement
- 13: Betätigungselement
- 14: Druckkammer
- 15: Druckkammer
- 16: Federpaket
- 17: Federpaket
- 18: Widerlager
- 19: Widerlager
- 20: Schraubenfeder
- 21: Einrichtung
- 22: Keilverbindung
- 23: Keilelement
- 24: Keilfläche
- 25: Keilfläche
- 26: Ring
- 27: Rückseite
- 28: Ringseite
- 29: Keilnut
- 30: Stützwandring
- 31: Federelement

## Patentansprüche

1. Kupplungseinrichtung, umfassend einen Außenlamellenträger (4, 5) mit daran axial verschiebbar angeordneten Außenlamellen (6, 7), einen Innenlamellenträger (8, 9) mit daran axial verschiebbaren Innenlamellen (10, 11), wobei die Außen- und die Innenlamellen (6, 7, 10, 11) ein Lamellenpaket bilden, sowie ein Betätigungselement (12, 13), über das das Lamellenpaket axial zusammendrückbar ist, wobei das Betätigungselement (12, 13) beim Zusammendrücken gegen ein Federpaket (16, 17) bewegbar ist, wobei eine Einrichtung (21) zum drehzahlabhängigen Variieren der Vorspannung des Federpakets (16, 17) vorgesehen ist, **dadurch gekennzeichnet, dass** die Einrichtung (21) mehrere radial bewegbare Keilelemente (23) umfasst, die mit einer Keilfläche (24) auf dem Federpaket (16, 17) zugeordneten Keilflächen (25) abgleiten.

2. Kupplungseinrichtung nach Anspruch 1, **dadurch gekennzeichnet, dass** jedes bewegbare Keilelement (23) an einer radial verlaufenden Führung (29) geführt ist.

3. Kupplungseinrichtung nach Anspruch 1 oder 2, **dadurch gekennzeichnet, dass** die Steigung der Keilflächen (24, 25) derart ist, dass die radial ausgelenkten Keilelemente (23) über das Federpaket (16, 17) wieder rückstellbar sind.

4. Kupplungseinrichtung nach Anspruch1 oder 2, **dadurch gekennzeichnet, dass** jedes Keilelement (23) gegen ein eine Rückstellkraft aufbauendes Federelement bewegbar ist.

5. Kupplungseinrichtung nach einem der vorangehenden Ansprüche, **dadurch gekennzeichnet, dass** das Federpaket (16, 17) eine Mehrzahl einzelner Federelemente (20) umfasst, denen ein einzelne Keilflächen (25) oder eine umlaufende Keilfläche aufweisender Ring (26) zugeordnet ist.

6. Kupplungseinrichtung nach Anspruch 5, **dadurch gekennzeichnet, dass** die Federelemente in Umfangsrichtung verteilt angeordnete Schraubenfedern (20) oder in Axialrichtung angeordnete Tellerfedern sind.

7. Kupplungseinrichtung nach einem der vorangehenden Ansprüche, **dadurch gekennzeichnet, dass** es eine nass laufende Kupplungseinrichtung (2, 3) ist.

8. Doppelkupplungseinrichtung umfassend zwei Kupplungseinrichtungen (2, 3) nach einem der vorangehenden Ansprüche.

## Claims

1. A clutch device comprising an outer disc carrier (4, 5) having outer discs (6, 7) arranged thereon for axial sliding, an inner disc carrier (8, 9) having inner discs (10, 11) which can be axially slid thereon, wherein the outer and inner discs (6, 7, 10, 11) form a disc assembly, and an actuating element (12, 13), by means of which the disc assembly can be axially compressed, wherein the actuating element (12, 13) can be moved against a spring assembly (16, 17) during the compression, wherein a device (21) is provided for varying the preload of the spring assembly (16, 17) in accordance with the rotational speed, **characterised in that** the device (21) comprises a plurality of radially movable wedge elements (23), which slide with a wedge surface (24) on wedge surfaces (25) associated with the spring assembly (16, 17).

2. The clutch device according to claim 1, **characterised in that** each movable wedge element (23) is guided on a radially extending guide (29).

3. The clutch device according to claim 1 or 2, **characterised in that** the slope of the wedge surfaces (24, 25) is such that the radially deflected wedge elements (23) can be reset by means of the spring assembly (16, 17).

4. The clutch device according to claim 1 or 2, **characterised in that** each wedge element (23) is movable against a spring element which builds up a restoring force.

5. The clutch device according to any one of the preceding claims, **characterised in that** the spring assembly (16, 17) comprises a plurality of individual spring elements (20) to which a single wedge surface (25) or a circumferential wedge surface ring (26) is assigned.

6. The clutch device according to claim 5, **characterised in that** the spring elements are helical springs (20) arranged distributed in the circumferential direction, or disc springs arranged in the axial direction.

7. The clutch device according to any one of the preceding claims, **characterised in that** it is a wet clutch device (2, 3).

8. A dual clutch device comprising two clutch devices (2, 3) according to any one of the preceding claims.

## Revendications

1. Ensemble embrayage, comprenant un support de disques externes (4, 5) avec des disques externes (6, 7) disposés sur celui-ci afin de pouvoir se déplacer axialement, un support de disques internes (8, 9) avec des disques internes (10, 11) disposés sur celui-ci afin de pouvoir se déplacer axialement, les disques externes et internes (6, 7, 10, 11) formant un jeu de disques et un élément d'actionnement (12, 13), par lequel le jeu de disques peut être comprimé axialement, l'élément d'actionnement (12, 13) étant mobile lors de la compression contre un jeu de ressorts (16, 17), un ensemble (21) étant prévu pour faire varier en fonction du régime la précontrainte du jeu de ressorts (16, 17), **caractérisé en ce que** l'ensemble (21) comprend une pluralité d'éléments de coin (23) mobiles radialement, qui glissent avec une surface de coin (24) sur des surfaces de coin (25) associées au jeu de ressort (16, 17).

2. Ensemble embrayage selon la revendication 1, **caractérisé en ce que** chaque élément de coin mobile (23) est guidé sur un guide s'étendant radialement (29).

3. Ensemble embrayage selon la revendication 1 ou 2, **caractérisé en ce que** la pente des surfaces de coin (24, 25) est telle que les éléments de coin (23) déviés radialement peuvent être réinitialisés via le jeu de ressort (16, 17).

4. Ensemble embrayage selon la revendication 1 ou 2, **caractérisé en ce que** chaque élément de coin (23) est mobile contre un élément de ressort qui crée une force de rappel.

5. Ensemble embrayage selon l'une quelconque des revendications précédentes, **caractérisé en ce que** le jeu de ressorts (16, 17) comprend une pluralité d'éléments de ressort individuels (20) auxquels est associée une surface de coin individuelle (25) ou un anneau présentant une surface de coin périphérique (26).

6. Ensemble embrayage selon la revendication 5, **caractérisé en ce que** les éléments de ressort sont des ressorts hélicoïdaux (20) disposés répartis dans la direction périphérique ou des ressorts à disque disposés dans la direction axiale.

7. Ensemble embrayage selon l'une quelconque des revendications précédentes, **caractérisé en ce qu'**il s'agit d'un ensemble embrayage à fonctionnement humide (2, 3).

8. Ensemble double embrayage comprenant deux ensembles embrayage (2, 3) selon l'une quelconque des revendications précédentes.
